(19) Europäisches Patentamt
European Patent Office
Office européen des brevets

(11) Publication number: **0 102 312**
**A1**

(12) **EUROPEAN PATENT APPLICATION**

(21) Application number: 83630119.2

(22) Date of filing: 28.07.83

(51) Int. Cl.³: C 08 G 18/42
C 08 G 18/67

(30) Priority: 28.07.82 US 402530

(43) Date of publication of application:
07.03.84 Bulletin 84/10

(84) Designated Contracting States:
DE FR GB IT

(71) Applicant: THE GOODYEAR TIRE & RUBBER COMPANY
1144 East Market Street
Akron, Ohio 44316(US)

(72) Inventor: Sullivan, Carl Maurice
100 Westover Drive
Akron Ohio 44313(US)

(74) Representative: Weyland, Joseph Jean Pierre
Goodyear International Tire Technical Center Patent
Department Avenue Gordon Smith
L-7750 Colmar-Berg(LU)

(54) **Unsaturated polyurethanes.**

(57) An unsaturated polyurethane which is the polymeric reaction product of one mole of a polyester, having a melting point no greater than 160°C. and an intrinsic viscosity of .12 to .6, with at least one mole of an organic polyisocyanate and at least one mole of a hydroxyl acrylate or methacrylate ester. The resulting polymer is capable of being cured by radiation.

EP 0 102 312 A1

# UNSATURATED POLYURETHANES

## State of the Art

U.S. Patent 4,139,436 discloses a liquid ethylenically unsaturated photopolymerizable polyetherurethane composition. The base photopolymer can be formed by reacting a polyether polyol having 2 or 3 hydroxyls, with an organic polyisocyanate and a hydroxy alkyl methacrylate or acrylate where the alkyl radial has 2 or 3 carbon atoms. This reaction may occur in the presence of a diluent, preferably comprising a polyethylene polyol acrylate or methacrylate of 200 to 6000 and preferably 500 to 1500 molecular weight of polyethylene polyol with 2 to 4 hydroxyls.

U.S. Patent 4,110,187 discloses a UV curable polyester binder and coating formulation. The claimed UV curable composition comprises a solution of (A) from 5 to about 50 percent by weight of a polyester of terephthalic acid esters and a glycol of from about 60 mole percent to 100 mole percent 1,2-propylene glycol and from 0 to 40 mole percent ethylene glycol; said polyester having an inherent viscosity of from about .05 to about .6; (B) from 95 to 50 percent by weight of ethylenically unsaturated photopolymerizable compound; and (C) an effective amount of photo initiator in amounts of from .5 to 25 percent by weight of the total photocurable composition. The photopolymerizable compound is the solvent. The disadvantage of this composition is that the photopolymerizable monomers are cured whereas the polyester serves only as a binder due to the absence of a double bond existing between two carbon atoms in the polyester itself.

Summary of the Invention:

There is disclosed a novel unsaturated polyurethane which is the polymeric reaction product of an unsaturated polyester, an organic diisocyanate and a hydroxyl acrylate or methacrylate ester. Also disclosed is the process for making the polyurethane of the present invention.

Detailed Description:

Disclosed is a process for the production of an unsaturated polyurethane comprising reacting at a temperature below 160°C., 1 mole of an unsaturated polyester having a melting point no greater than 160°C. and an intrinsic viscosity of .12 to .6, as determined in a 60/40 by volume mixed solvent system of phenol and tetrachloroethane at 30°C., with at least 1.0 mole of an organic polyioscyanate and at least 1.0 mole of a hydroxyl acrylate or methacrylate ester represented by the general structural formula:

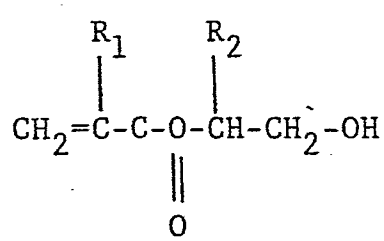

or

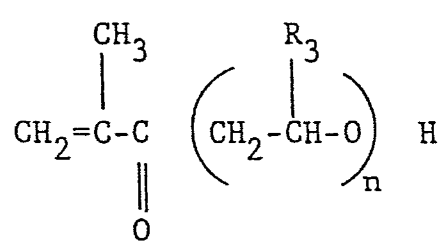

wherein $R_1$, $R_2$, and $R_3$ are either hydrogen or a methyl group respectively and n is an integer from 2 to 10.

Also disclosed is an unsaturated polyurethane comprising the polymeric reaction product of 1 mole of a unsaturated polyester having a melting point no greater than 160°C. and an intrinsic viscosity of .12 to .6, with at least 1.0 moles of an organic polyisocyanate and at least 1.0 moles of a hydroxyl acrylate or methacrylate ester represented by the general structural formula

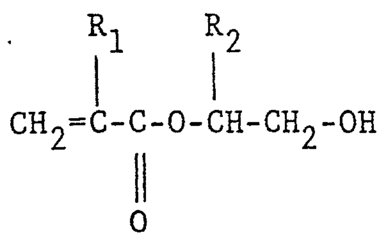

or

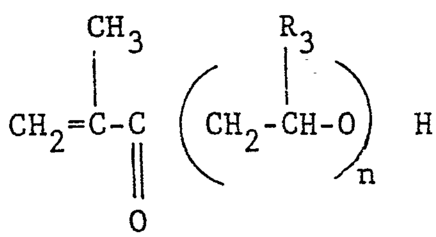

wherein $R_1$, $R_2$, and $R_3$ are either hydrogen or a methyl group respectively and n is an integer from 2 to 10, at a temperature no greater than 160°C.

The production of a copolyester resin conventionally employs two stages: an esterification stage and a condensation stage. The preparation of the polyester prepolymer occurs in the esterification stage by the reaction of a diol and a dicarboxylic compound. Optionally, the introduction of a chain branching agent in the esterification stage such as that disclosed in Patent No. 4,264,751 herein incorporated by reference, may produce a polyester prepolymer having internal chain branching which has been found to lower the melt

viscosity of the polyester at a given molecular weight to improve the leveling properties of the final powder coating. Leveling properties are defined to be that property yielding a smooth and substantially untextured finish over a smooth surface substrate, such as polished metal.

The dicarboxylic compound of the present invention may be either a dicarboxylic acid or dicarboxylic ester. The dicarboxylic acids may be an alkyl dicarboxylic acid having a total of from 2 to 16 carbon atoms, or an aryl dicarboxylic acid having a total of from 8 to 16 carbon atoms. Preferably the acid compound of the polyester does not contain more than 80 mol percent of an aryl dicarboxylic acid and/or alkyl substituted aryl dicarboxylic acid. Specific examples of alkyl dicarboxylic acids suitable for the present invention are oxalic acid, malonic acid, succinic acid, glutaric acid, adipic acid, pimelic acid, suberic acid, azelaic acid, sebacic acid, and the like. Various examples of an aryl acid include the various isomers and phthalic acid, such as paraphthalic (terephthalic) acid and naphthalic acid. Specific examples of alkyl substituted aryl acids include the various isomers of dimethylphthalic acid, such as dimethylisophthalic acid, dimethylorthophthalic acid, and dimethylterephthalic acid; the various acids of diethylphthalic acid, and diethylterephthalic acid; the various isomers of dimethylterephthalic acid, such as 2,6-dimethylnaphthalic acid and 2,5-dimethylnaphthalic; and the various isomers of diethylnaphthalic acid. Generally, dimethylterephthalic acid, isophthalic acid and terephthalic acid are preferred dicarboxylic acids.

In lieu of the various dicarboxylic acids, the various diesters thereof may be utilized. Thus, the dicarboxylic compound may be an alkyl diester

containing a total of from about 2 to 20 carbon atoms, as well as the alkyl substituted aryl diesters containing about from 10 to about 20 carbon atoms. Examples of specific alkyl diesters include dimethyl adipate, diethyl adipate, and the like. Specific examples of the various alkyl substituted aryl diesters include the various isomers of dimethyl phthalate, the various isomers of diethyl phthalate, the various isomers of dimethyl naphthalate and the various isomers of diethyl naphthalate. Of the dicarboxylic diesters, preferably the various isomers of dimethyl phthalate (dimethyl terephthalate) are used. Of the dicarboxylic compounds, the various isomers of dimethyl terephthalate are most preferred.

These carboxylic acids, or the diester thereof, react in the esterification stage with a diol containing from about 2 to 10 carbon atoms. The glycol may be straight-chained or branched. Specific examples include ethylene glycol, propylene glycol, trimethylene glycol, 1,2-butane diol, 1,3-butane diol, 1,4-butane diol, 2,3-butane diol, neopentyl glycol, hexamethylene glycol, cyclohexane dimethynol, in the ester diol product of neopentyl glycol and hydropavalic acid (propanoic acid, 3-hydroxy-2,2-dimethyl-3-hydroxy-2, 2-dimethylpropyl ester). Of the various diols, ethylene glycol and neopentyl glycol are most preferred. The diol is added to the esterification stage in the reactive charging step in a concentration in comparison to the dicarboxylic compound in a mole ratio from about 2.20 to about 1.15:1. Preferably the molar ratio is from about 1.7 to about 1.3:1.

Introduction of a multi-functional alcohol chain branching agent into the esterification stage creates a polymer having an increased hydroxyl number which, upon carboxyl end group capping, increases the required

amount of the carboxyl capping agent. That agent, remaining unreactive in excessive concentrations, may be toxicologically undesirable.

The polyester prepolymer, whether subjected to internal chain branching or not, is polycondensed in the condensation stage to produce a copolyester resin having an intrinsic viscosity from about .10 to about .6 dl/g and preferably from .13 to .45 dl/g. Intrinsic viscosity is determined by a method utilizing a 60/40 (by weight) mixture of phenol/tetrachloroethane as a solvent and a reading of intrinsic viscosity at 30°C.

In U.S. Patent 4,124,570 and U.S. Patent 4,264,751 copolyester resins may be produced to have significant hydroxyl end group concentration and may be used in the practice of the present invention. A copolyester resin having significant carboxyl group concentration can also be used in the present invention. The compounding stage with an unsaturated polyester with the organic polyioscyanate and the hydroxyl acrylate or methacrylate ester requires that the hydroxyl or carboxyl terminated polyester have a melting point, no greater than 160°C.

In those circumstances where an internal chain branching agent is desirable, the chain branching agent of the present invention is a compound having at least a functionality of 3 to incorporate within the chain of the polyester prepolymer and retain a branch reactive cite. Chain branching agents having at least a trifunctionality include trimellitic anhydride, pentaerythritol, glycerol, trimethylol propane, triethylol propane, and other multi-functional alcohols. The chain branching agent is reacted in the esterification stage in a concentration in comparison with the concentration of the dicarboxylic compound in

BAD ORIGINAL

a mole ratio less than about .10:1. Desirably, the chain branching agent has a concentration from about .5 to 10 mole percent, comparative to the concentration of the dicarboxylic compound, and preferably in a concentration of from 3 to 5 mole percent.

The esterification stage comprises a reaction charging step and a chain branching agent additional step. The chain branching agent addition step occurs simultaneously with the reactant charging step when the alcohol chain branching agent is a multifunctional alcohol such as trimethylol propane, triethlol propane, pentaerythritol, and glycerol. The reactant charging step proceeds the chain branching agent addition step when trimellitic anhydride is the chain branching agent. In such latter case, the chain branching addition step proceeds after at least 90 percent of the dicarboxylic compound and diol have completed methanolysis. Whereas, the esterification stage proceeds uninterrupted or undelayed when the chain branching agent is one of the multi-functional alcohols. An additional 20 minutes is required in the esterification stage before the condensation stage when the trimellitic anhydride is the chain branching agent.

Known catalysts can be used to prepare the carboxyl terminated polyester. Examples of catalysts are dibutyl tin oxide, manganese acetate, zinc acetate tertiary butyl titanate and antimony trioxide.

Copolyester resins having carboxyl or hydroxyl terminated end groups are prepared to be reacted with the organic polyisocyanate and hydroxyl acrylate or methacrylate ester for use in this invention. These copolyester resins preferably have internal chain branching to provide a low melt viscosity of the polyester at a given molecular weight to improve the

BAD ORIGINAL

leveling properties of the copolyester powder coating or adhesive.

In those circumstances where the polyester resin produced as described herein above, does not contain carboxyl terminated end groups, the termini of the copolyester polymer chain may be terminated with carboxyl groups for reaction with the organic polyisocyanate and hydroxyl acrylate or methacrylate ester to make a copolyester resin as per the invention. The hydroxyl capping agents may be any anhydride of a carboxylic acid having at least two acid groups which upon reaction with the terminus of the polyester chain, retains a free carboxyl acid group as a reactive site for the organic polyisocyanate and hydroxy acrylate or methacrylate compounds. Specific examples of these anhydrides include anhydrides of the formula:

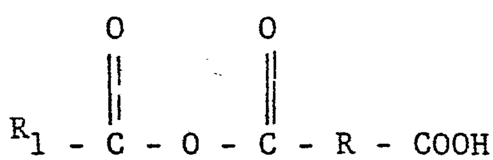

wherein R is selected from the group consisting of an alkyl radical having from 1 to 18 carbon atoms, a halo-substituted alkyl radical having from 1 to 18 carbon atoms, a hydroxy-substituted akyl radical having from 1 to 18 carbon atoms, an aryl radical having from 6 to 24 carbon atoms; and wherein $R_1$ is an organic radical volatile at temperatures of the carboxyl capping reaction; anhydrides of the formula:

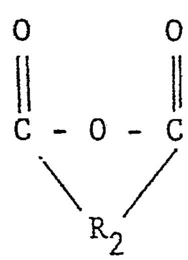

wherein $R_2$ is an organic radical having from 1 to 18 carbon atoms. Desirably, anhydrides of acids having at least two carboxylic acid end groups may be used as the hydroxyl capping agent. Specific examples of these anhydrides are phthalic anhydride, succinic anhydride, trimellitic anhydride, and the like. Of these anhydrides, trimellitic anhydride is preferred.

The hydroxyl capping agent may be added subsequent to the condensation of excess glycols but prior to the addition of the organic polyisocyanate and hydroxyl acrylate or methacrylate esters. The hydroxyl capping agent may be added in a concentration of from about 1 mole percent to about 25 mole percent of carboxylate units contained in the final polymer. Desirably, the concentration is from about 10 mole percent to 14 mole percent of carboxylate units contained in the final polymer. Preferably, the concentration of the hydroxyl capping agents is about 12.5 mole percent per mole of carboxylate units.

When introducing the hydroxyl capping agent, temperatures within the reactor should range from about 150° to about 275°C. Desirably, the temperatures should range between 200° and 250°C and preferably the range of temperature is from about 210° to about 235°C. The pressure in the reactor is one atmosphere or ambiant pressures. The atmosphere for the reactor is in an inert atmosphere, preferably $N_2$.

Although the polyurethanes of this invention possess good resistance toward heat aging and photodegration, it is advisable to stabilize these compositions by incorporating stabilizers in the copolyester compositions. Examples of such known compounds are:

1,3,5-trimethyl-2,4,
6-tris(3,5-di-tert-butyl-4-hydroxy-benzyl)

benzene,
tetrakis[methylene(3,5-di-tert-butyl-4-hydroxy-hydrocin-namate)]methane,
N,N'-hexamethylene bis(3,5-di-tert-butyl-4-hydroxyhydrocinnamamide),
N,N'-trimethylene bis (3,5-di-tert-butyl-4-hydroxyhydrocin-namamide),
hydroquinone,
p-benzoquinone,
p-methoxyphenol,
α-naphthaquinon,
anthraquinone,
mono-tert-butyl hydroquinone,
2,5-diphenyl-p-benzoquinone,
pyridine,
phenothiazene,
p-diaminobenzene,
beta-naphthol,
naphthylamine,
pyrogallol,
cupious chloride and nitrobenzene.

After the unsaturated polyester having a melting point no greater than 160°C. has been prepared, the polyester is then compounded. The compounding stage should be conducted at a temperature no greater than 160°C. Preferably the temperature is 60 to 110°C. At temperatures at or greater than 160°C. the urethane linkages formed by the reaction of the isocyanate with the hydroxyl or carboxyl end group tends to degrade. During the compounding stage, an organic polyisocyanate and a hydroxyl methacrylate are added to the unsaturated polyester. The organic polyisocyanates useful in the present invention are:

(a) Alkane diisocyanates such as:

ethylene diisocyanate;
trimethylene diisocyanate;
propylene-1,2-diisocyanate;
1,4-tetramethylene diisocyanate;
butylene-1,3-diisocyanate;
1,10-decamethylene diisocyanate;
octadecamethylene diisocyanate; etc.

(b) Alkene diisocyanates such as:
1-propylene-1,2-diisocyanate;
2-propylene-1,2-diisocyanate;
1-butylene-1,2-diisocyanate;
3-butylene-1,2-diisocyanate;
1-butylene-1,2-diisocyanate;
1-butylene-2,3-diisocyanate; etc.

(c) Alkylidene diisocyanates such as:
ethylidene diisocyanate;
propylidene-1,1-diisocyanate;
propylidene-2,2-diisocyanate; etc.

(d) Cycloalkylene diisocyanates such as:
cyclopentylene-1,3-diisocyanate;
cyclohexylene-1,2-diisocyanate;
cyclohexylene-1,3-diisocyanate;
cyclohexylene-1,4-diisocyanate;
1,6-hexamethylenediisocyanate; etc.

(e) Cycloalkylidene diisocyanates such as:
cyclopentylidene diisocyanate;
cyclohexylidene diisocyanate; etc.

(f) Aromatic diisocyanates such as:
m-phenylene diisocyanate;
o-phenylene diisocyanate;
p-phenylene diisocyanate;
1-methyl-2,4-phenylene diisocyanate;
naphthylene-1,4-diisocyanate;
2,4-tolyene diisocyanate;
2,6-tolylene diisocyanate;

BAD ORIGINAL

commercial mixtures of toluene-2,4 and 2,6-diisocyanates;
4,4-diphenylmethane diisocyanate;
1,5-naphthalene diisocyanate;
methylene-bis-(4-phenylisocyanate);
2,2-propylene-bis-(4-phenylisocyanate);
diphenylene-4,4'-diisocyanate;
3,3'-diphenyl-4,4'-biphenylene diisocyanate;
3,3'-dichloro-4,4'-biphenylene diisocyanate;
cumene-2,4-diisocyanate;
4-methoxy-1,3-phenylenediisocyanate;
4-chloro-1,3-phenylenediisocyanate;
4-bromo-1,3-phenylenediisocyanate;
4-ethoxy-1,3-phenylenediisocyanate;
2,4'-diisocyanatodiphenylether;
5,6-dimethyl-1,3-phenylenediisocyanate;
2,4-dimethyl-1,3-phenylenediisocyanate;
4-4'-diisocyanatodiphenylether;
benzidinediisocyanate;
4,6-dimethyl-1,3-phenylenediisocyanate;
9,10-anthracenediisocyanate;
4,4'-diisocyanatodibenzyl;
3,3'-dimethyl-4,4'-diisocyanatodiphenylmethane;
2,6-dimethyl-4,4'-diisocyanatodiphenyl;
2,4-diisocyanatostilbene;
3,3'-dimethyl-4,4'-diisocyanatodiphenyl;
3,3'-dimethoxy-4,4'-diisocyanatodiphenyl;
1,4-anthracenediisocyanate;
2,5-fluorenediisocyanate;
1,8-naphthalenediisocyanate;
2,6-diisocyanatobenzfuran;
2,4,6-toluenetriisocyanate;
p,p',p"-triphenylmethane triisocyanate;

(g) Aliphatic-aromatic diisocyanates such as:

xylylene-1,4-diisocyanate;
xylylene-1,3-diisocyanate;
4,4'-diphenylenemethane diisocyanate;
4,4-diphenylenepropane diisocyanate; etc.

(h) Diisocyanates containing hetero-atoms such as:
$OCN-CH_2CH_2-O-CH_2CH_2-NCO$;
2,3-pyridine diisocyanate; etc.;

The amount of organic polyisocyanate used in the present invention should be such that for every mole of unsaturated polyester there should be at least 1 mole of organic polyisocyanate. Preferably the ratio of unsaturated polyester/organic polyisocyanate should be 1:1.5 to 1:2.5. Most preferred is a 1:2 ratio.

The hydroxyl acrylate esters or methacrylate esters useful in the practice of the present invention are represented by the general structural formula:

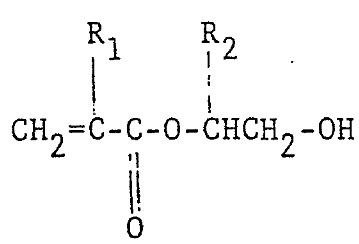

or

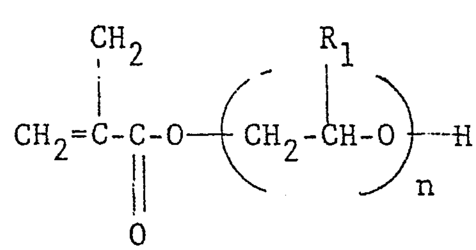

(wherein $R_1$, $R_2$, and $R_3$ are either hydrogen or a methyl group respectively and n is an integer from 2 to 10),

representative examples of such components are 2-hydroxyethyl acrylate, 2-hydroxypropyl acrylate, 2-hydroxyethyl methacrylate, 2-hydroxypropyl methacrylate, polyethylene glycol monomethacrylates and polypropylene glycol monomethacrylates.

The amount of organic hydroxyl acrylate ester or methacrylate ester useful in the practice of the present invention should be such that there is for every mole of organic polyisocyanate, there is an equivalent mole of hydroxyl acrylate ester or methacrylate ester such that a molar ratio of diisocyanate/hydroxyl acrylate ester or methacrylate ester is 1:1.

In order to make the polyurethane of the present invention U.V. curable one must use photosensitizer. Preferably a phosphine compound is used as a photosensitizer in the present invention. The following are representative phosphines useful in this invention:

triphenylphosphine
tri-p-toluyl-phosphine
diphenylmethyl-phosphine
diphenyl-ethyl-phosphine
diphenylpropyl-phosphine
dimethyl-phenyl-phosphine
diethylphenyl-phosphine
dipropyl-phenyl-phosphine
divinylphenyl-phosphine
divinyl-p-methoxyphenyl-phosphine
divinyl-p-bromophenyl-phosphine
divinyl-p-toluyl-phosphine
diallyl-phenyl-phosphine
diallyl-p-methoxyphenyl-phosphine
diallyl-p-bromophenyl-phosphine
diallyl-p-toluyl-phosphine

The photosensitizer is preferably added after the polyester resin has been reacted with the organic isocyanate and hydroxyl acrylate or methacrylate ester in amounts conventionally used for photosensitizers.

Preferably, photoinitiators are used in the present invention. When photoinitiators are used, they are present in amounts of from .5 to 25 percent by weight and preferably 1 to 15 percent of the total photocurable composition. Typical examples of photoinitiators which are applicable in the present invention are:

2,2 dimethoxy 2-phenylacetophenone
benzil
isopropyl benzoin ether
isobutyl benzoin ether
diethoxy acetophenone
4',4'-bi (chloromethyl) benxophenone
α -chloroacetophenone
4-tert-butyl, α,α,α -trichloroacetophenone
benzophenone/methyl diethanol amine
α, α di-sec-butoxyacetophenone
p-methoxybenzophenone
acetophenone
propiophenone
xanthrone
benzoin
benzaldehyde
napthoquinone
anthroquinone
benzophenone

In the application of the novel resins, as disclosed in the present invention, one may employ diluents as a means of controlling viscosity of said resin. Such diluents are preferably ethenically unsaturated photopolymerizable compounds.

The ethylenically unsaturated compounds useful in the present invention are lower alkyl and substituted alkyl esters of acrylic and methacrylic acid. Also useful are allyl acrylates and methacrylates. Examples of such compounds include:

methyl methacrylate
ethylmethacrylate
2-ethylhexyl methacrylate
isobutyl methacrylate
glycidyl methacrylate
glycidyl acrylate
butyl acrylate
2-hydroxyethyl acrylate
2-methoxyethyl acrylate
2-phenoxyethyl acrylate
2-hydroxypropyl acrylate
benzyl acrylate
tetrahydrofurfuryl acrylate
2-ethylhexyl acrylate
trimethylolpropane acrylate
1,6 hexanediol diacrylate
1,6 hexanediol dimethylacrylate
ethoxy ethoxy ethyl acrylate
pentaerythritol triacrylate

Also useful is:

N-vinyl-2-pyrrolidone

The amount of diluent used in conjunction with the polyurethane of the present invention will vary according to the desired application and the preferred viscosity of the diluent resin composition. Preferably the diluent is in the range of 95 to 40 percent by weight of the overall composition.

In the application of the novel polyurethane of the present invention one may employ levelers to aid in the uniform dispersion of the resin. Known levelers

can be used in the present invention, such as silicone polycarbinols, silicone surfactants, cellulose acetate butyrate resins and trisnonyl phenyl phosphate, preferably silicone polycarbinols. The amount of leveler used in conjunction with the resin of the present invention will vary according to the desired application. Preferably the leveler is present in the range of .3 to 3 percent by weight of the overall composition.

The source of radiation for curing the resin of the present invention can be any suitable source, such as actinic radiation produced from a mercury, xenon or carbon arc, a beam from a laser source, for example, a He-Cd laser, or the electron beam produced in or from a cathode ray gun. The only limitation placed on the radiation source used is that it must have an energy level at the irradiated composition sufficient to impart to the polymerizable system energy at an intensity high enough to reach the decomposition level of the photosensitive compound.

The following examples are supplied in order to illustrate, but not necessarily to limit, the scope of the present invention. All parts are based on parts by weight unless specifically stated otherwise. All intrinsic viscosity numbers were measured in a 60/40 phenol/tetrachloroethane mixed solvent at 30°C.

Units defined as parts is meant to be parts by weight unless specified otherwise.

Example 1

To a 500 milliliter glass reactor kettle was added 1550 parts of an unsaturated copolyester resin which has an initial charge molar ratio of ethylene glycol-terephthalic acid/isophthalic acid/azelaic acid of 100-34/21/45 and an I.V. of .85. To this

copolyester was added 40 parts of polyethylene glycol and thereafter the reactor was heated to 220°C. for a period of 90 minutes under a nitrogen atmosphere. Thereafter the reactants were cooled to room temperature. 232.14 parts of β-hydroxyethylene methacrylate, 185.71 parts of isophrone diisocyanate, .159 parts of stanous octoate and .318 parts of hydroquinone. The reaction was allowed to exotherm and was air cooled for a period of 120 minutes keeping the temperature at 80°C.

The above reaction product was transferred to a stain glass jar. 10.04 parts of triphenyl phosphine and 15.06 parts of 2,2 dimethoxy-2-phenylacetophenone were added and mechanically blended to provide a homogeneous mixture.

The reactant product was removed from the stain glass jar and was poured onto untreated Mylar™ film.

The treated film was then subjected to ultraviolet radiation for a period of 4 minutes. The resin was found to be tack free and resilient.

The cured resin of Example 1 had the following physical characteristics,

| | |
|---|---|
| Tensile as determined by ASTM D638-72 | 295 pounds per square inch |
| Elongation as determined by ASTM 638-72 | 225% |
| Tear as determined by ASTM D1004 | 30.2 pounds per inch |
| Peel adhesion between Mylar™ sheets as determined by ASTM D816-55 | 2.81 |

Example 2

The same charge ratios and procedures were repeated as in Example 1 except the 1550 parts of the unsaturated copolyester of Example 1 was replaced with an unsaturated copolyester resin with a 55/45-56/17/27 ethylene glycol/neopentyl glycol-terephthalic acid/isophthalic acid/azelaic acid molar ratio; having an intrinsic viscosity of .80.

After treatment to ultraviolet radiation for a period of 4 minutes, the resin was found to be tack free and resilient.

Example 3

The same charge ratios and procedure were repeated as in Example I except the 1550 parts of the unsaturated copolyester of Example 1 was replaced with an unsaturated copolyester resin with a 55/45-45/45/10 ethylene glycol/neopentyl glycol-terephthalic acid/isophthalic acid/sebacic acid molar ratio having an intrinsic viscosity of .74.

After treatment to ultraviolet radiation for a period of 4 minutes, the resin was found to be tack free and resilient.

Example 4

To a stainless steel reactor was charged 450.6 parts of tetramethylene glycol, 590.85 parts of hexamethylene glycol, 249.15 parts of terephthalic acid and 581.45 parts of isophthalic acid such that the molar ratio of glycol to acid was 2:1. The reactants were heated to 230°C. for 150 minutes. The pressure was then lowered to 0.02 psi for 15 minutes until an I.V. of .2 was reached.

BAD ORIGINAL

The acid number and hydroxyl numbers were then determined to be 0.19 and 308. 2132.2 parts of isophrone diisocyanate, 0.51 parts of stannous octoate, and 1346 parts of β-hydroxyethylene methacrylate and 10.2 parts of hydroquinone were added to the reactor. The reaction temperature was then maintained at 80°C. by air cooling the reactor. The reactants were allowed to react for 120 minutes.

The reaction product was then removed and placed in a stain glass jar. For every 100 parts of resin 0.5 parts of triphenylphosphine and 0.75 parts of 2,2 dimethoxy- 2-phenylacetophenone were added and mechanically blended.

This compounded resin was then poured onto untreated Mylar™ film. The treated film was then subjected to ultraviolet radiation for a period of 4 minutes. The resin was found to be very stiff and tack free.

Example 5

The same charge ratios and procedures were repeated as in Example IV except the acid moiety came from dimethylisophthalate and dimethylterephthalate.

After subjected the treated Mylar™ film to ultraviolet radiation for a period of 4 minutes, the resin was found to be very stiff and tack free.

Example 6

To a 500 milliliter glass reactor kettle was added 260 parts of the same unsaturated copolyester resin of Example 1 which had a molar charge ratio of ethylene glycol-terephthalic acid/isophthalic acid/azalaic acid of 100-34/21/45 and which had been subsequently depolymerized with polyethylene glycol as in Example 1. 37.96 parts of β-hydroxyethylene methacrylate, 47.51

parts of isophrone diisocyanate, .15 parts of stannous octoate and .2 parts of hydroquinone were added to the reactor. The reactor temperature was then maintained at 80°C. by air cooling the reactor. The reactants were allowed to react for 120 minutes.

The reaction product was then removed and placed in a stain glass jar. 1.73 parts of triphenylphosphine and 2.6 parts of 2,2 dimethoxy 2-phenylacetophenone were added and was mechanically blended.

This compounded resin was then poured onto untreated Mylar™ film.. The treated film was then subjected to ultraviolet radiation for a period of 4 minutes. The resin was found to be tack free and resilient.

Example 7

To a 500 milliliter glass reactor kettle was added 311.85 parts of the same unsaturated copolyester resin of Example 1 which had a molar charge ratio of ethylene glycol-terephthalic acid/isophthalic acid/azalaic acid of 100-34/21/45 and which had been subsequently depolymerized with polyethylene glycol as in Example 1 13.27 parts of β-hydroxyethylene methacrylate, 25.24 parts of isophrone diisocyanate, .15 parts of stannous octoate and .2 parts of hydroquinone were added to the reactor. The reactor temperature was then maintained at 80°C. by air cooling the reactor. The reactants were allowed to react for 120 minutes.

The reaction product was then removed and placed in a stain glass jar. 1.75 parts of triphenylphosphine and 2.6 parts of 2,2 dimethyoxy 2-phenylacetophenone were added and was mechanically blended.

This compounded resin was then poured onto untreated Mylar™ film. The treated film was then subjected to ultraviolet radiation for a period of 4

minutes. The resin was found to be tack free and resilient.

Example 8

To a 500 milliliter glass reactor kettle was added 359.4 parts of the same unsaturated copolyester resin of Example 1 which had a molar charge ratio of ethylene-terephthalic acid/isophthalic acid/azalaic acid of 100-34/21/45 and which had been subsequently depolymerized with polyethylene glycol as in Example 1. 29.73 parts of β-hydroxyethylene methacrylate, 33.94 parts of isophrone diisocyanate, .15 parts of stannous octoate and .2 parts of hydroquinone were added to the reactor. The reactor temperature was then maintained at 80°C. by air cooling the reactor. The reactants were allowed to react for 120 minutes.

The reaction product was then removed and placed in a stain glass jar. 2.11 parts of triphenylphosphine and 3.17 parts of 2,2 dimethoxy 2-phenylacetophenone were added and was mechanically blended.

This compounded resin was then poured onto untreated Mylar™ film. The treated film was then subjected to ultraviolet radiation for a period of 4 minutes. The resin was found to be tack free and resilient.

## CLAIMS

1. A process for the production of an unsaturated polyurethane characterized by reacting at a temperature no greater than 160°C., 1 mole of a unsaturated polyester having a melting point no greater than 160°C. and an intrinsic viscosity of .12 to .6, with at least 1.0 mole of an organic polyisocyanate and at least 1.0 mole of a hydroxyl acrylate or methacrylate ester represented by the general structural formula

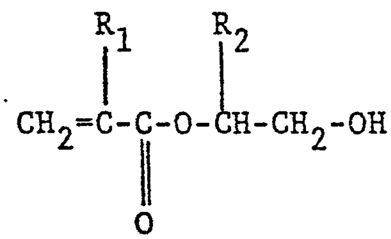

or

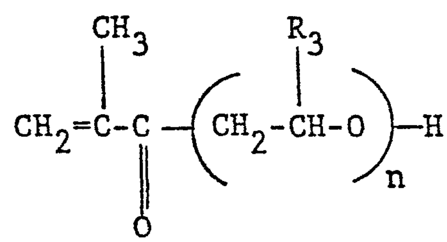

wherein $R_1$, $R_2$ and $R_3$ are either hydrogen or a methyl group respectively and n is an integer from 2 to 10, at a temperature no greater than 160°C.

2. A process of Claim 1 wherein the unsaturated polyester characterized in that the polymeric reaction product of a dicarboxylic compound and a diol, wherein the dicarboxylic compound is a dicarboxylic acid having

a total of from 2 to 16 carbon atoms or a dicarboxylic ester having a total of from 2 to 20 carbon atoms.

3. A process of Claim 2 characterized in that the dicarboxylic compound comprises from 20 to 80 mol percent of an aryl dicarboxylic acid or ester thereof and/or alkyl substituted aryl dicarboxylic acid or ester thereof and from 80 to 20 mol percent of an alkyl dicarboxylic acid or ester thereof.

4. A process of Claim 1 characterized in that the organic polyisocyanate is selected from the group comprising toluene diisocyanate, methyl phenylene diisocyanate, isophrone diisocyanate and hexamethylene diisocyanate.

5. A process of Claim 1 characterized in that the hydroxyl acrylate or methacrylate ester is selected from the group comprising 2-hydroxy acrylate, 2-hydroxy propylacrylate, 2-hydroxyethyl methacrylate, 2-hydroxylpropyl methacrylate, polyethylene glycol monomethacrylate and polypropylene glycol monomethacrylates.

6. An unsaturated polyurethane characterized by the polymeric reaction product of 1 mole of an unsaturated polyester having a melting point no greater than 160°C. and an intrinsic viscosity of .12 to .6, with at least 1.0 mole of an organic polyisocyanate and at least 1.0 mole of a hydroxyl acrylate or methacrylate ester represented by the general structural formula

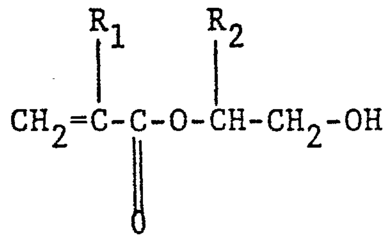

or

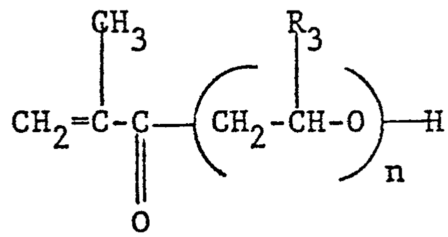

wherein $R_1$, $R_2$ and $R_3$ are either hydrogen or a methyl group respectively and n is an integer from 2 to 10, at a temperature no greater than 160°C.

7. A polyurethane of Claim 6, further characterized in that the unsaturated polyester comprises the polymeric reaction product of a dicarboxylic compound and a diol wherein the dicarboxylic compound is a dicarboxylic acid having a total of from 2 to 16 carbon atoms or a dicarboxylic ester having a total of from 2 to 20 carbon atoms.

8. A polyurethane of Claim 7 further characterized in that the dicarboxylic compound comprises from 20 to 80 mol percent of an aryl dicarboxylic acid or ester thereof and/or alkyl substituted aryl dicarboxylic acid or ester thereof and from 80 to 20 mol percent of an alkyl dicarboxylic acid or ester thereof.

9. A polyurethane of Claim 6 further characterized in that the organic polyisocyanate is selected from the group comprising toluene

diisocyanate, methyl phenylene diisocyanate, isophrane diisocyanate and hexamethylene diisocyanate.

10. A polyurethane of Claim 6 further characterized in that the hydroxyl acrylate or methacrylate ester is selected from the group comprising 2-hydroxy acrylate, 2-hydroxyethyl methacrylate, 2-hydroxylpropyl methacrylate, polyethylene glycol monomethacrylate and polypropylene glycol monomethacrylate.